# EUROPEAN PATENT APPLICATION

(11) **EP 3 598 748 A1**
(43) Date of publication of application: **22.01.2020**
(21) Application number: 17909151.7
(22) Date of filing: 09.05.2017
(51) Int. Cl.: H04N 13/117, H04N 13/167, H04N 13/279, H04N 13/296, H04N 13/344, H04N 13/366, H04N 13/398, G06F 3/14, G06T 15/00

(54) **VR DRAWING METHOD, DEVICE AND SYSTEM**

(71) Applicant: Huawei Technologies Co., Ltd., Longgang District Shenzhen, Guangdong 518129 (CN)
(72) Inventor: WANG, Anli, Shenzhen Guangdong 518129 (CN)
(74) Representative: Isarpatent
(86) International application number: PCT/CN2017/083663
(87) International publication number: WO 2018/205152

(57) **Abstract**

A VR drawing method, device, and system relate to the field of drawing technologies, and can resolve a problem that a time used for establishing a drawing graphic is relatively long because a computing capability of a GPU (20) of a terminal device (01) is insufficient. A specific solution is as follows: determining, by the terminal device (01), N^{th}-frame image data of a first drawing graphic and N^{th}-frame image data of a second drawing graphic; sending, by the terminal device (01), a drawing instruction to a VR device (02); establishing, by the terminal device (01) by using the first GPU (20) in the terminal device (01), an N^{th}-frame image of the second drawing graphic based on the N^{th}-frame image data of the second drawing graphic; sending, by the terminal device (01), the N^{th}-frame image of the second drawing graphic to the VR device (02); and sending, by the terminal device (01), a control instruction to the VR device (02). The foregoing solution is applied to a process of establishing an image of a drawing graphic.

## Description

### TECHNICAL FIELD

Embodiments of the present invention relate to the field of drawing technologies, and in particular, to a VR drawing method, device, and system.

### BACKGROUND

A virtual reality (Virtual Reality, VR) technology is a computer simulation system technology that enables creation and experience of a virtual world. The VR technology can create a virtual information environment in multi-dimensional information space by using a graphics processing unit (Graphic Processing Unit, GPU) of a terminal device and various interface devices such as display and control devices, to provide a user with immersive experience.

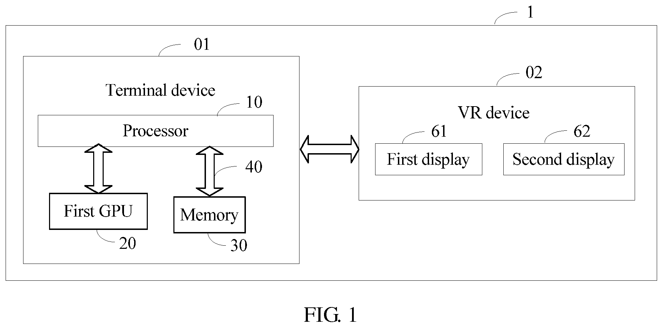

In actual application, after a user wears a VR device and performs an operation on a terminal device, the user can view a picture (that is, a drawing graphic) of a 3D effect on a display screen of the VR device. FIG. 1 is a schematic diagram of a system architecture of an existing VR drawing system. As shown in FIG. 1, the VR drawing system 1 may include a terminal device 01 and a VR device 02. There is a communication connection between the terminal device 01 and the VR device 02. As shown in FIG. 1, the terminal device 01 includes a processor 10, a first GPU 20, a memory 30, and a bus 40. The VR device 02 includes displays. The displays are specifically a first display 61 and a second display 62. A graphic presented to a left eye is obtained by the first GPU 20 by processing each frame of image of a drawing graphic corresponding to the left eye, and then is transmitted to the first display 61 for display. A graphic presented to a right eye is obtained by the first GPU 20 by processing each frame of image of a drawing graphic corresponding to the right eye, and then is transmitted to the second display 62 for display.

It can be learned from the foregoing that the graphics presented to the left eye and the right eye are both obtained by the first GPU 20 of the terminal device through processing. However, a computing capability of the first GPU 20 is limited. Therefore, the first GPU 20 takes a relatively long time to process the graphics presented to the left eye and the right eye.

### SUMMARY

This application provides a VR drawing method, device, and system, to improve a drawing graphic processing capability.

To achieve the foregoing objective, the following technical solutions are used in this application:

According to a first aspect of this application, a VR drawing method is provided. The method includes: determining, by a terminal device, N^{th}-frame image data of a first drawing graphic and N^{th}-frame image data of a second drawing graphic, where N is a positive integer greater than or equal to 1; sending, by the terminal device, a drawing instruction including the N^{th}-frame image data of the first drawing graphic to a VR device, to instruct the VR device to establish, by using a second GPU in the VR device, an N^{th}-frame image of the first drawing graphic based on the N^{th}-frame image data of the first drawing graphic; establishing, by the terminal device by using a first GPU in the terminal device, an N^{th}-frame image of the second drawing graphic based on the N^{th}-frame image data of the second drawing graphic; sending, by the terminal device, the N^{th}-frame image of the second drawing graphic to the VR device, to instruct the VR device to display the N^{th}-frame image of the second drawing graphic; and sending, by the terminal device, a control instruction to the VR device, to instruct the VR device to synchronously display the N^{th}-frame image of the first drawing graphic. The N^{th}-frame image of the second drawing graphic and the N^{th}-frame image of the first drawing graphic are used to form an N^{th}-frame VR image. In this application, the first GPU in the terminal device and the second GPU in the VR device may respectively establish the N^{th}-frame image of the second drawing graphic and the N^{th}-frame image of the first drawing graphic, and the first GPU and the second GPU may establish the N^{th}-frame image of the second drawing graphic and the N^{th}-frame image of the first drawing graphic in parallel. Therefore, according to the method in this embodiment of the present invention, a time used for establishing an N^{th}-frame image of a drawing graphic is reduced, and a drawing graphic processing capability is improved. In addition, a VR core processing element is used to control the first GPU and the second GPU to synchronously send the N^{th}-frame images of the drawing graphics to displays of the VR device, so that a first display and a second display synchronously display the N^{th}-frame VR image.

With reference to the first aspect, in a possible implementation of this application, the control instruction may include an N^{th} display moment. Correspondingly, the "sending, by the terminal device, a drawing instruction to a VR device" may include: determining, by the terminal device, an N^{th} drawing moment of the VR device based on the N^{th} display moment; and sending, by the terminal device, the drawing instruction to the VR device before the N^{th} drawing moment of the VR device. The N^{th} drawing moment of the VR device is earlier than the N^{th} display moment, and duration between the N^{th} drawing moment and the N^{th} display moment is greater than or equal to duration used by the second GPU to establish the N^{th}-frame image of the first drawing graphic. The terminal device may determine, based on the N^{th} display moment, a moment for sending the drawing instruction to the VR device, so that the VR device can complete establishment of the N^{th}-frame image of the first drawing graphic before the N^{th} display moment or at the N^{th} display moment.

With reference to the first aspect and the foregoing possible implementation, in another possible implementation of this application, the "establishing, by the terminal device by using a first GPU in the terminal device, an N^{th}-frame image of the second drawing graphic based on the N^{th}-frame image data of the second drawing graphic" may include: determining, by the terminal device, an N^{th} drawing moment of the terminal device based on the N^{th} display moment; and establishing, by the terminal device starting from the N^{th} drawing moment of the terminal device by using the first GPU, the N^{th}-frame image of the second drawing graphic based on the N^{th}-frame image data of the second drawing graphic. The N^{th} drawing moment of the terminal device is earlier than the N^{th} display moment, and duration between the N^{th} drawing moment and the N^{th} display moment is greater than or equal to duration used by the first GPU to establish the N^{th}-frame image of the second drawing graphic. The terminal device may determine, based on the N^{th} display moment, a moment at which the terminal device starts to establish the N^{th}-frame image of the second drawing graphic, so that the terminal device can complete establishment of the N^{th}-frame image of the second drawing graphic before the N^{th} display moment or at the N^{th} display moment.

With reference to the first aspect and the foregoing possible implementations, in another possible implementation of this application, before the "sending, by the terminal device, a drawing instruction to a VR device", the method in this application may further include: receiving, by the terminal device, a synchronization signal that is sent by the VR device and that includes a current moment of the VR device; and adjusting, by the terminal device based on the current moment of the VR device, a current moment of the terminal device to be the same as the current moment of the VR device. After the terminal device adjusts the current moment of the terminal device to be the same as the current moment of the VR device, it can be ensured that when the terminal device sends the N^{th}-frame image of the second drawing graphic and the control instruction to the VR device, the VR device can synchronously display the N^{th}-frame image of the second drawing graphic and the N^{th}-frame image of the first drawing graphic at the N^{th} display moment.

With reference to the first aspect and the foregoing possible implementations, in another possible implementation of this application, the "determining, by a terminal device, N^{th}-frame image data of a first drawing graphic and N^{th}-frame image data of a second drawing graphic" may include: receiving, by the terminal device, sensor data transmitted by the VR device; and determining, by the terminal device, the N^{th}-frame image data of the first drawing graphic and the N^{th}-frame image data of the second drawing graphic that are corresponding to the sensor data. The N^{th}-frame image data of the first drawing graphic and the N^{th}-frame image data of the second drawing graphic are data that is obtained by the terminal device and that is generated after a user's head turns or moves, for example, a viewing angle of the user. Therefore, an image, of a drawing graphic, established by the terminal device based on the N^{th}-frame image data of the first drawing graphic and the N^{th}-frame image data of the second drawing graphic is an image that meets the user's desire, thereby improving VR experience of the user.

According to a second aspect of this application, a VR drawing method is provided. The method includes: receiving, by a VR device, a drawing instruction that is sent by a terminal device and that includes N^{th}-frame image data of a first drawing graphic, where N is a positive integer greater than or equal to 1; establishing, by the VR device by using a second GPU in the VR device, an N^{th}-frame image of the first drawing graphic based on the N^{th}-frame image data of the first drawing graphic; receiving, by the VR device, an N^{th}-frame image that is of a second drawing graphic and that is sent by the terminal device; receiving, by the VR device, a control instruction sent by the terminal device; and displaying, by the VR device, the N^{th}-frame image of the second drawing graphic, and synchronously displaying the N^{th}-frame image of the first drawing graphic according to the control instruction. The N^{th}-frame image of the second drawing graphic and the N^{th}-frame image of the first drawing graphic are used to form an N^{th}-frame VR image. In this application, the first GPU in the terminal device and the second GPU in the VR device may respectively establish the N^{th}-frame image of the second drawing graphic and the N^{th}-frame image of the first drawing graphic, and the first GPU and the second GPU may establish the N^{th}-frame image of the second drawing graphic and the N^{th}-frame image of the first drawing graphic in parallel. Therefore, according to the method in this embodiment of the present invention, a time used for establishing an N^{th}-frame image of a drawing graphic is reduced, and a drawing graphic processing capability is improved. In addition, a VR core processing element is used to control the first GPU and the second GPU to synchronously send the N^{th}-frame images of the drawing graphics to displays of the VR device, so that a first display and a second display synchronously display the N^{th}-frame VR image.

With reference to the second aspect, in a possible implementation of this application, the control instruction may include an N^{th} display moment. Correspondingly, the "establishing, by the VR device by using a second GPU in the VR device, an N^{th}-frame image of the first drawing graphic based on the N^{th}-frame image data of the first drawing graphic" may include: establishing, by the VR device starting from an N^{th} drawing moment of the VR device by using the second GPU, the N^{th}-frame image of the first drawing graphic based on the N^{th}-frame image data of the first drawing graphic. The N^{th} drawing moment of the VR device is earlier than the N^{th} display moment, and duration between the N^{th} drawing moment and the N^{th} display moment is greater than or equal to duration used by the second GPU to establish the N^{th}-frame image of the first drawing graphic. The terminal device may determine, based on the N^{th} display moment, a moment for sending the drawing instruction to the VR device, so that the VR device can complete establishment of the N^{th}-frame image of the first drawing graphic before the N^{th} display moment or at the N^{th} display moment.

With reference to the second aspect and the foregoing possible implementation, in another possible implementation of this application, before the "receiving, by a VR device, a drawing instruction sent by a terminal device", the method in this application may further include: sending, by the VR device, a synchronization signal to the terminal device, where the synchronization signal includes a current moment of the VR device, and the synchronization signal is used to synchronize a current moment of the terminal device. The terminal device may adjust, based on the current moment of the VR device, the current moment of the terminal device to be the same as the current moment of the VR device, to ensure that when the terminal device sends the N^{th}-frame image of the second drawing graphic and the control instruction to the VR device, the VR device can synchronously display the N^{th}-frame image of the second drawing graphic and the N^{th}-frame image of the first drawing graphic at the N^{th} display moment.

With reference to the second aspect and the foregoing possible implementations, in another possible implementation of this application, before the "establishing, by the VR device by using a second GPU in the VR device, an N^{th}-frame image of the first drawing graphic based on the N^{th}-frame image data of the first drawing graphic", the method in this application may further include: sending, by the VR device, sensor data to the terminal device, where the sensor data is used by the terminal device to determine the N^{th}-frame image data of the first drawing graphic and N^{th}-frame image data of the second drawing graphic. An image, of a drawing graphic, established by the terminal device based on the N^{th}-frame image data of the first drawing graphic and the N^{th}-frame image data of the second drawing graphic is an image that meets a user's desire, thereby improving VR experience of the user.

According to a third aspect of this application, a terminal device is provided. The terminal device may include a communications interface, a processor, and a first GPU. The processor may be configured to: determine N^{th}-frame image data of a first drawing graphic and N^{th}-frame image data of a second drawing graphic, and generate a drawing instruction, where N is a positive integer greater than or equal to 1. The communications interface may be configured to send the drawing instruction including the N^{th}-frame image data of the first drawing graphic to a VR device, to instruct the VR device to establish, by using a second GPU in the VR device, an N^{th}-frame image of the first drawing graphic based on the N^{th}-frame image data of the first drawing graphic. The first GPU may be configured to establish an N^{th}-frame image of the second drawing graphic based on the N^{th}-frame image data of the second drawing graphic. The communications interface may be further configured to send the N^{th}-frame image of the second drawing graphic to the VR device, to instruct the VR device to display the N^{th}-frame image of the second drawing graphic. The communications interface may be further configured to send a control instruction to the VR device, to instruct the VR device to synchronously display the N^{th}-frame image of the first drawing graphic. The N^{th}-frame image of the second drawing graphic and the N^{th}-frame image of the first drawing graphic are used to form an N^{th}-frame VR image.

With reference to the third aspect, in a possible implementation of this application, the control instruction may include an N^{th} display moment. Correspondingly, the processor may be specifically configured to: determine an N^{th} drawing moment of the VR device based on the N^{th} display moment, where the N^{th} drawing moment of the VR device is earlier than the N^{th} display moment, and duration between the N^{th} drawing moment and the N^{th} display moment is greater than or equal to duration used by the second GPU to establish the N^{th}-frame image of the first drawing graphic. The communications interface may be specifically configured to: send the drawing instruction to the VR device before the N^{th} drawing moment of the VR device.

With reference to the third aspect and the foregoing possible implementation, in another possible implementation of this application, the processor may be specifically configured to: determine an N^{th} drawing moment of the terminal device based on the N^{th} display moment, where the N^{th} drawing moment of the terminal device is earlier than the N^{th} display moment, and duration between the N^{th} drawing moment and the N^{th} display moment is greater than or equal to duration used by the first GPU to establish the N^{th}-frame image of the second drawing graphic. The first GPU may be specifically configured to: establish, starting from the N^{th} drawing moment of the terminal device, the N^{th}-frame image of the second drawing graphic based on the N^{th}-frame image data of the second drawing graphic.

With reference to the third aspect and the foregoing possible implementations, in another possible implementation of this application, the communications interface may be further configured to: before sending the drawing instruction to the VR device, receive a synchronization signal sent by the VR device, where the synchronization signal includes a current moment of the VR device. The processor may be further configured to adjust, based on the current moment of the VR device, a current moment of the terminal device to be the same as the current moment of the VR device.

With reference to the third aspect and the foregoing possible implementations, in another possible implementation of this application, the communications interface may be further configured to receive sensor data transmitted by the VR device. The processor may be further configured to determine the N^{th}-frame image data of the first drawing graphic and the N^{th}-frame image data of the second drawing graphic that are corresponding to the sensor data.

With reference to the third aspect and the foregoing possible implementations, in another possible implementation of this application, the terminal device may further include a memory. The memory may be configured to store a computer executable instruction. The processor, the communications interface, the first GPU, and the memory are connected to each other by using a bus. When the terminal device runs, the processor executes the computer executable instruction stored in the memory.

It should be noted that for detailed descriptions and benefit analysis of the function units in the third aspect and the possible implementations of the third aspect, reference may be made to corresponding descriptions and technical effects in the first aspect and the possible implementations of the first aspect. Details are not described herein again.

According to a fourth aspect of this application, a computer storage medium is provided. The computer storage medium stores program code of one or more parts. When at least one processor of the terminal device or the VR device in the third aspect executes the program code, the terminal device or the VR device may be driven to perform the VR drawing method according to the first aspect, the second aspect, and the corresponding optional embodiments. Optionally, the at least one processor may include at least one of the following: a processor, a GPU, or a communications interface.

According to a fifth aspect of this application, a VR device is provided. The VR device may include a communications interface, a second GPU, and a display component. The communications interface may be configured to receive a drawing instruction that is sent by a terminal device and that includes N^{th}-frame image data of a first drawing graphic, where N is a positive integer greater than or equal to 1. The second GPU may be configured to establish an N^{th}-frame image of the first drawing graphic based on the N^{th}-frame image data of the first drawing graphic. The communications interface may be further configured to receive an N^{th}-frame image that is of a second drawing graphic and that is sent by the terminal device. The communications interface may be further configured to receive a control instruction sent by the terminal device. The display component may be configured to display the N^{th}-frame image of the second drawing graphic, and synchronously display the N^{th}-frame image of the first drawing graphic according to the control instruction. The N^{th}-frame image of the second drawing graphic and the N^{th}-frame image of the first drawing graphic are used to form an N^{th}-frame VR image.

With reference to the fifth aspect, in a possible implementation of this application, the control instruction may include an N^{th} display moment. Correspondingly, the second GPU may be specifically configured to: establish, starting from an N^{th} drawing moment of the VR device, the N^{th}-frame image of the first drawing graphic based on the N^{th}-frame image data of the first drawing graphic. The N^{th} drawing moment of the VR device is earlier than the N^{th} display moment, and duration between the N^{th} drawing moment and the N^{th} display moment is greater than or equal to duration used by the second GPU to establish the N^{th}-frame image of the first drawing graphic.

With reference to the fifth aspect and the foregoing possible implementation, in another possible implementation of this application, the communications interface may be further configured to: before receiving the drawing instruction sent by the terminal device, send a synchronization signal to the terminal device, where the synchronization signal includes a current moment of the VR device, and the synchronization signal is used to synchronize a current moment of the terminal device.

With reference to the fifth aspect and the foregoing possible implementations, in another possible implementation of this application, the VR device may further include a sensor. The sensor may be configured to: before the second GPU establishes the N^{th}-frame image of the first drawing graphic based on the N^{th}-frame image data of the first drawing graphic, obtain sensor data, where the sensor data is used by the terminal device to determine the N^{th}-frame image data of the first drawing graphic and N^{th}-frame image data of the second drawing graphic. The communications interface may be further configured to send the sensor data to the terminal device.

It should be noted that for detailed descriptions and benefit analysis of the function units in the fifth aspect and the possible implementations of the fifth aspect, reference may be made to corresponding descriptions and technical effects in the second aspect and the possible implementations of the second aspect. Details are not described herein again.

According to a sixth aspect of this application, a VR drawing apparatus is provided. The VR drawing apparatus may include a determining module, a sending module, and an establishment module. The determining module may be configured to determine N^{th}-frame image data of a first drawing graphic and N^{th}-frame image data of a second drawing graphic, where N is a positive integer greater than or equal to 1. The sending module may be configured to send a drawing instruction including the N^{th}-frame image data of the first drawing graphic to a VR device, to instruct the VR device to establish, by using a second GPU in the VR device, an N^{th}-frame image of the first drawing graphic based on the N^{th}-frame image data of the first drawing graphic. The establishment module may be configured to establish, by using a first GPU in the terminal device, an N^{th}-frame image of the second drawing graphic based on the N^{th}-frame image data that is of the second drawing graphic and that is determined by the determining module. The sending module may be further configured to send the N^{th}-frame image that is of the second drawing graphic and that is established by the establishment module to the VR device, to instruct the VR device to display the N^{th}-frame image of the second drawing graphic. The sending module may be further configured to send a control instruction to the VR device, to instruct the VR device to synchronously display the N^{th}-frame image of the first drawing graphic. The N^{th}-frame image of the second drawing graphic and the N^{th}-frame image of the first drawing graphic are used to form an N^{th}-frame VR image.

With reference to the sixth aspect, in a possible implementation of this application, the control instruction may include an N^{th} display moment. Correspondingly, the sending module may be specifically configured to: determine an N^{th} drawing moment of the VR device based on the N^{th} display moment; and send the drawing instruction to the VR device before the N^{th} drawing moment of the VR device. The N^{th} drawing moment of the VR device is earlier than the N^{th} display moment, and duration between the N^{th} drawing moment and the N^{th} display moment is greater than or equal to duration used by the second GPU to establish the N^{th}-frame image of the first drawing graphic.

With reference to the sixth aspect and the foregoing possible implementation, in another possible implementation of this application, the establishment module may be specifically configured to: determine an N^{th} drawing moment of the terminal device based on the N^{th} display moment; and establish, starting from the N^{th} drawing moment of the terminal device by using the first GPU, the N^{th}-frame image of the second drawing graphic based on the N^{th}-frame image data that is of the second drawing graphic and that is determined by the determining module. The N^{th} drawing moment of the terminal device is earlier than the N^{th} display moment, and duration between the N^{th} drawing moment and the N^{th} display moment is greater than or equal to duration used by the first GPU to establish the N^{th}-frame image of the second drawing graphic.

With reference to the sixth aspect and the foregoing possible implementations, in another possible implementation of this application, the VR drawing apparatus in this application may further include a receiving module and an adjustment module. The receiving module may be configured to: before the sending module sends the drawing instruction to the VR device, receive a synchronization signal sent by the VR device, where the synchronization signal includes a current moment of the VR device. The adjustment module may be configured to adjust, based on the current moment of the VR device, a current moment of the terminal device to be the same as the current moment of the VR device.

With reference to the sixth aspect and the foregoing possible implementations, in another possible implementation of this application, the determining module may be specifically configured to: receive sensor data transmitted by the VR device, and determine the N^{th}-frame image data of the first drawing graphic and the N^{th}-frame image data of the second drawing graphic that are corresponding to the sensor data.

It should be noted that function units in the sixth aspect and the possible implementations of the sixth aspect in this embodiment of the present invention are obtained by logically dividing the VR drawing apparatus, to perform the VR drawing method in the first aspect and the optional manners of the first aspect. For detailed descriptions and benefit analysis of the function units in the sixth aspect and the possible implementations of the sixth aspect, refer to the corresponding descriptions and technical effects in the first aspect and the possible implementations of the first aspect. Details are not described herein again.

According to a seventh aspect of this application, a VR drawing apparatus is provided. The VR drawing apparatus may include a receiving module, an establishment module, and a display module. The receiving module may be configured to receive a drawing instruction that is sent by a terminal device and that includes N^{th}-frame image data of a first drawing graphic, where N is a positive integer greater than or equal to 1. The establishment module may be configured to establish, by using a second GPU in a VR device, an N^{th}-frame image of the first drawing graphic based on the N^{th}-frame image data of the first drawing graphic. The receiving module may be further configured to receive an N^{th}-frame image that is of a second drawing graphic and that is sent by the terminal device. The receiving module may be further configured to receive a control instruction sent by the terminal device. The display module may be configured to display the N^{th}-frame image that is of the second drawing graphic and that is received by the receiving module, and synchronously display, according to the control instruction, the N^{th}-frame image that is of the first drawing graphic and that is established by the establishment module. The N^{th}-frame image of the second drawing graphic and the N^{th}-frame image of the first drawing graphic are used to form an N^{th}-frame VR image.

With reference to the seventh aspect, in a possible implementation of this application, the control instruction may include an N^{th} display moment. Correspondingly, the establishment module may be specifically configured to: establish, starting from an N^{th} drawing moment of the VR device by using the second GPU, the N^{th}-frame image of the first drawing graphic based on the N^{th}-frame image data of the first drawing graphic. The N^{th} drawing moment of the VR device is earlier than the N^{th} display moment, and duration between the N^{th} drawing moment and the N^{th} display moment is greater than or equal to duration used by the second GPU to establish the N^{th}-frame image of the first drawing graphic.

With reference to the seventh aspect and the foregoing possible implementation, in another possible implementation of this application, the VR drawing apparatus in this application may further include a sending module. The sending module may be configured to: before the receiving module receives the drawing instruction sent by the terminal device, send a synchronization signal to the terminal device, where the synchronization signal includes a current moment of the VR device, and the synchronization signal is used to synchronize a current moment of the terminal device.

With reference to the seventh aspect and the foregoing possible implementations, in another possible implementation of this application, the sending module may be further configured to: before the establishment module establishes the N^{th}-frame image of the first drawing graphic based on the N^{th}-frame image data of the first drawing graphic, send sensor data to the terminal device, where the sensor data is used by the terminal device to determine the N^{th}-frame image data of the first drawing graphic and the N^{th}-frame image data of the second drawing graphic.

It should be noted that function units in the seventh aspect and the possible implementations of the seventh aspect in this embodiment of the present invention are obtained by logically dividing the VR drawing apparatus, to perform the VR drawing method in the second aspect and the optional manners of the second aspect. For detailed descriptions and benefit analysis of the function units in the seventh aspect and the possible implementations of the seventh aspect, refer to the corresponding descriptions and technical effects in the second aspect and the possible implementations of the second aspect. Details are not described herein again.

According to an eighth aspect of this application, a VR drawing system is provided. The VR drawing system may include the terminal device according to the first aspect and the possible implementations of the first aspect, and the VR device according to the second aspect and the possible implementations of the second aspect.

### BRIEF DESCRIPTION OF DRAWINGS

FIG. 1 is a schematic diagram of a system architecture of an existing VR drawing system;
FIG. 2 is a schematic diagram of a system architecture of a VR drawing system according to an embodiment of the present invention;
FIG. 3 is a schematic structural diagram of a VR device according to an embodiment of the present invention;
FIG. 4 is a schematic diagram of an interaction process between a module or a component of a terminal device and a module or a component of a VR device according to an embodiment of the present invention;
FIG. 5A and FIG. 5B are a flowchart 1 of a VR drawing method according to an embodiment of the present invention;
FIG. 6 is a schematic diagram of an example in which a user changes an angle of viewing an N^{th}-frame image of a drawing graphic according to an embodiment of the present invention;
FIG. 7A and FIG. 7B are a flowchart 2 of a VR drawing method according to an embodiment of the present invention;
FIG. 8 is a schematic diagram of an example in which a VR core processing element determines an N^{th} drawing moment of a VR device according to an embodiment of the present invention;
FIG. 9 is a schematic diagram of an example in which a VR core processing element determines an N^{th} drawing moment of a terminal device according to an embodiment of the present invention;
FIG. 10A and FIG. 10B are a flowchart 3 of a VR drawing method according to an embodiment of the present invention;
FIG. 11 is a possible schematic diagram 1 of a VR drawing apparatus according to an embodiment of the present invention;
FIG. 12 is a possible schematic diagram 2 of a VR drawing apparatus according to an embodiment of the present invention;
FIG. 13 is a possible schematic diagram 3 of a VR drawing apparatus according to an embodiment of the present invention; and
FIG. 14 is a possible schematic diagram 4 of a VR drawing apparatus according to an embodiment of the present invention.

### DESCRIPTION OF EMBODIMENTS

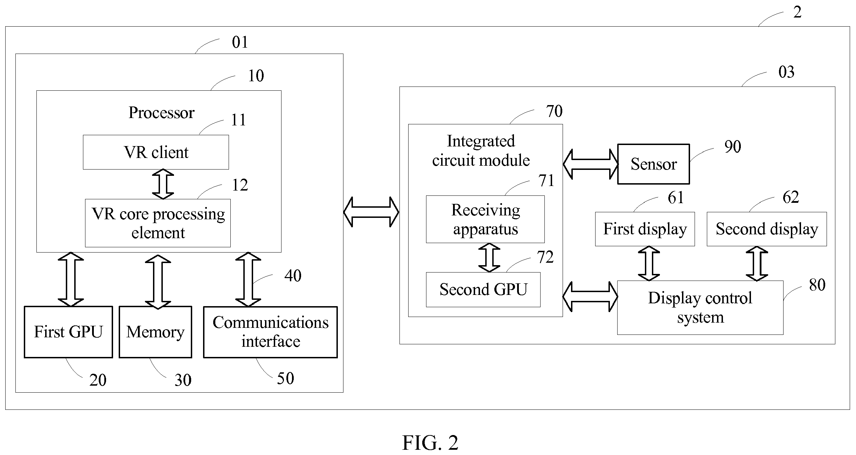

An embodiment of the present invention provides a VR drawing system. As shown in FIG. 2, the VR drawing system 2 may include a terminal device 01 and a VR device 03.

As shown in FIG. 2, the terminal device 01 includes a processor 10, a first GPU 20, a memory 30, a bus 40, and a communications interface 50. A VR client 11 and a VR core processing element 12 run on the processor 10.

The VR device 03 may include displays (for example, a first display 61 and a second display 62), an integrated circuit module 70, a display control system 80, and a sensor 90. The integrated circuit module 70 includes a receiving apparatus 71 and a second GPU 72. The receiving apparatus 71 and the second GPU 72 in this embodiment of the present invention may further run on a system on chip (System On Chip, SoC).

The terminal device 01 may be connected to the VR device 03 in a wired or wireless manner. The processor 10, the memory 30, and the first GPU 20 may be connected to each other by using the bus 40. The bus 40 may be a peripheral component interconnect (English: Peripheral Component Interconnect, PCI for short) bus, an extended industry standard architecture (English: Extended Industry Standard Architecture, EISA for short) bus, or the like. The bus 40 may include an address bus, a data bus, a control bus, and the like.

The processor 10 is a control center of the terminal device 01, and may be a processor, or may be a collective name of a plurality of processing elements. For example, the processor 10 may be a central processing unit (Central Processing Unit, CPU), or may be an application-specific integrated circuit (Application Specific Integrated Circuit, ASIC), or one or more integrated circuits configured to implement the embodiments of the present invention, for example, one or more microprocessors, one or more digital signal processors (digital signal processor, DSP), or one or more field programmable gate arrays (Field Programmable Gate Array, FPGA). The processor 10 may perform various functions of the terminal device 01 by running or executing a software program stored in the memory 30, and invoking data stored in the memory 30.

Specifically, the VR client 11 and the VR core processing element 12 run on the processor 10. The VR client 11 is a VR application program of the terminal device 01, and the VR client 11 may interact with a user. For example, the VR client 11 may be configured to obtain an operation instruction of the user, and obtain image data of a drawing graphic according to the operation instruction of the user, for example, N^{th}-frame image data of a first drawing graphic and N^{th}-frame image data of a second drawing graphic in this embodiment of the present invention. N is a positive integer greater than or equal to 1. The VR core processing element 12 is an image processing operating system of the terminal device 01, and the VR core processing element 12 may interact with the VR client 11 to obtain corresponding data, and control the first GPU 20 and the second GPU 72 to process a drawing graphic.

The first GPU 20 and the second GPU 72 each are an image processor, and may be configured to process a drawing graphic. For example, the first GPU 20 may be configured to establish an image of the first drawing graphic, and the second GPU 72 may be configured to establish an image of the second drawing graphic.

The memory 30 may be configured to store at least one of running data or a software module in the terminal device 01. For example, the memory 30 may be configured to store N^{th}-frame image data of a drawing graphic provided in this embodiment of the present invention.

The communications interface 50 is a channel for data and instruction transmission. For example, the communications interface 50 may be configured to transmit a drawing instruction in this embodiment of the present invention.

The first display 61 and the second display 62 are output devices, and are display tools that display data in a device on a screen for reflection to human eyes. For example, each display may be a liquid crystal display (Liquid Crystal Display, LCD) or a corresponding display drive circuit. The first display 61 and the second display 62 may be configured to display a drawing graphic. For example, the first display 61 may be configured to display an N^{th}-frame image of the first drawing graphic, and the second display 62 may be configured to display an N^{th}-frame image of the second drawing graphic.

The sensor 90 is a detection apparatus that can sense measured information, and can convert the sensed information into an electrical signal or information in another required form according to a specific rule for output, to meet requirements for information transmission, processing, storage, display, recording, control, and the like. The sensor 90 may be configured to: sense turning or moving of a user's head, obtain image data of a drawing graphic that changes after the turning or the moving of the user's head, and transmit the obtained image data of the drawing graphic to the VR client by using the VR core processing element 12. In this embodiment of the present invention, the sensor 90 is used to sense the turning or the moving of the user's head, to obtain the image data of the drawing graphic that changes after the turning or the moving of the user's head.

The receiving apparatus 71 may be a communications interface, configured to receive data, an instruction, or the like sent by the terminal device 01. For example, the receiving apparatus 71 may be configured to receive a drawing instruction that is sent by the terminal device 01 and that includes the N^{th}-frame image data of the first drawing graphic. The receiving apparatus 71 may further interact with the second GPU 72 to transmit the received data or instruction to the second GPU 72. For example, the receiving apparatus 71 may be a wired communications interface or a wireless communications interface, and is coupled to and works collaboratively with the communications interface 50. Various types of signals or data may be transmitted between the terminal device 01 and the receiving apparatus 71 by using the communications interface 50. When both the communications interface 50 and the receiving apparatus 71 are wireless communications interfaces, wireless communication protocols such as Wi-Fi (wireless fidelity), Bluetooth, and infrared NFC (near field communication) or various other cellular wireless communication protocols may be supported.

The display control system 80 may be configured to generate a synchronization signal, and may be further configured to process an image of a drawing graphic. For example, the display control system 80 may be configured to generate a synchronization signal provided in this embodiment of the present invention. The display control system 80 may be further configured to scan each pixel of the N^{th}-frame image of the second drawing graphic in this embodiment of the present invention. To be specific, the display control system 80 identifies or processes each pixel, and transmits a result of the scanning to the second display 62 in the VR device for display.

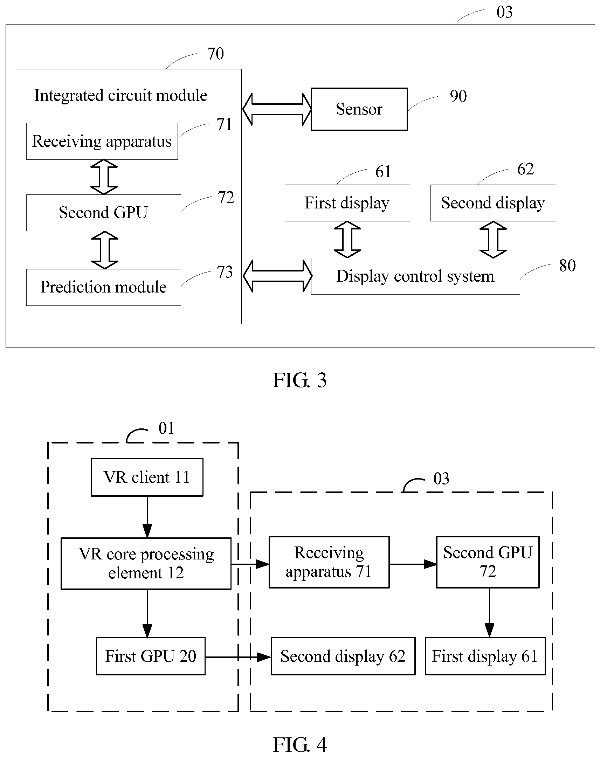

Further, as shown in FIG. 3, the integrated circuit module 70 of the VR device 03 in FIG. 2 may further include a prediction module 73. The prediction module 73 may be configured to: predict an angle of viewing a drawing graphic of a user, and send a prediction result to the VR core processing element 12. The VR core processing element 12 sends the prediction result to the VR client 11, and the VR client 11 determines image data of the drawing graphic based on the prediction result, and sends the image data to the VR core processing element 12, so that the VR core processing element 12 can control the first GPU 20 and the second GPU 72 to process the drawing graphic based on the prediction result. The prediction module 73 may be a processor or a hardware accelerometer.

The following briefly describes an interaction process between modules or components in FIG. 2 based on FIG. 4. It should be noted that a drawing graphic of a 3D effect viewed by the user on the display of the VR device 03 is obtained by the GPU by processing each frame of image of the drawing graphic. After processing one frame of image of the drawing graphic, the GPU continues to process a next frame of image of the drawing graphic. In FIG. 4, a VR drawing method is described only by using an example in which the GPU processes an N^{th}-frame image of a drawing graphic.

Specifically, as shown in FIG. 4, the VR client 11 may determine N^{th}-frame image data of the drawing graphic based on an operation instruction of the user (for example, the N^{th}-frame image data of the first drawing graphic and the N^{th}-frame image data of the second drawing graphic). The N^{th}-frame image data of the drawing graphic may come from the sensor 90, for example, captured data of a camera, or may be data stored in the memory 30. The VR client 11 sends the N^{th}-frame image data of the drawing graphic to the VR core processing element 12. After receiving the N^{th}-frame image data of the drawing graphic, the VR core processing element 12 sends a drawing instruction including the N^{th}-frame image data of the first drawing graphic to the receiving apparatus 71. The receiving apparatus 71 sends the received drawing instruction to the second GPU 72, so that the second GPU 72 establishes the N^{th}-frame image of the first drawing graphic based on the N^{th}-frame image data of the first drawing graphic included in the drawing instruction. After sending the drawing instruction to the receiving apparatus 71, the VR core processing element 12 sends the N^{th}-frame image data of the second drawing graphic to the first GPU 20 in a form of an instruction, so that the first GPU 20 establishes the N^{th}-frame image of the second drawing graphic based on the N^{th}-frame image data of the second drawing graphic. The VR core processing element 12 controls the first GPU 20 to send the N^{th}-frame image of the second drawing graphic to the second display 62, and controls the second GPU 72 to send the N^{th}-frame image of the first drawing graphic to the first display 61, so that the second display 62 displays the N^{th}-frame image of the second drawing graphic, and the first display 61 synchronously displays the N^{th}-frame image of the first drawing graphic.

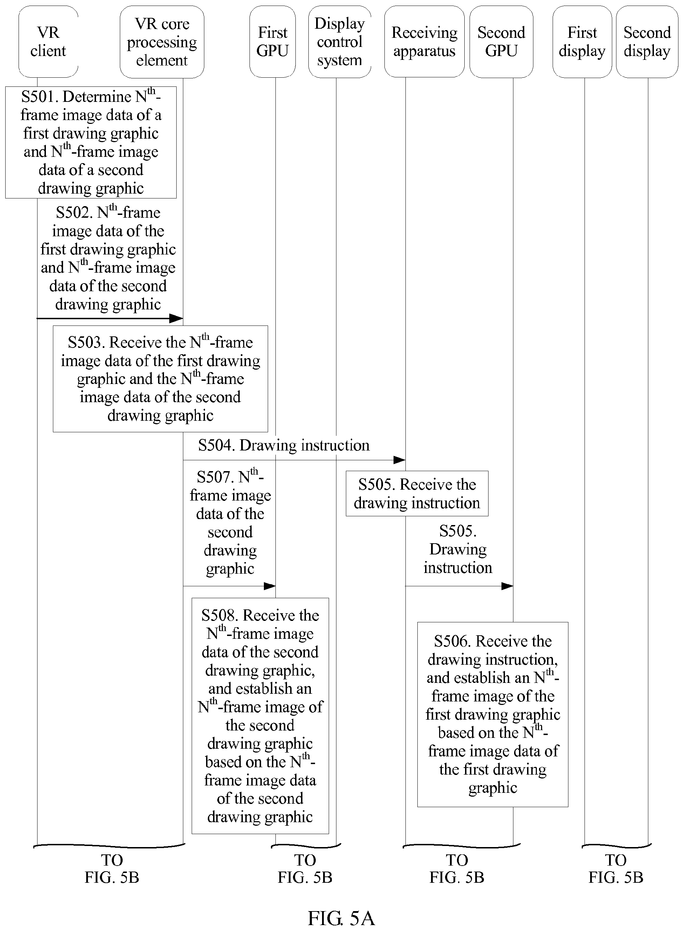

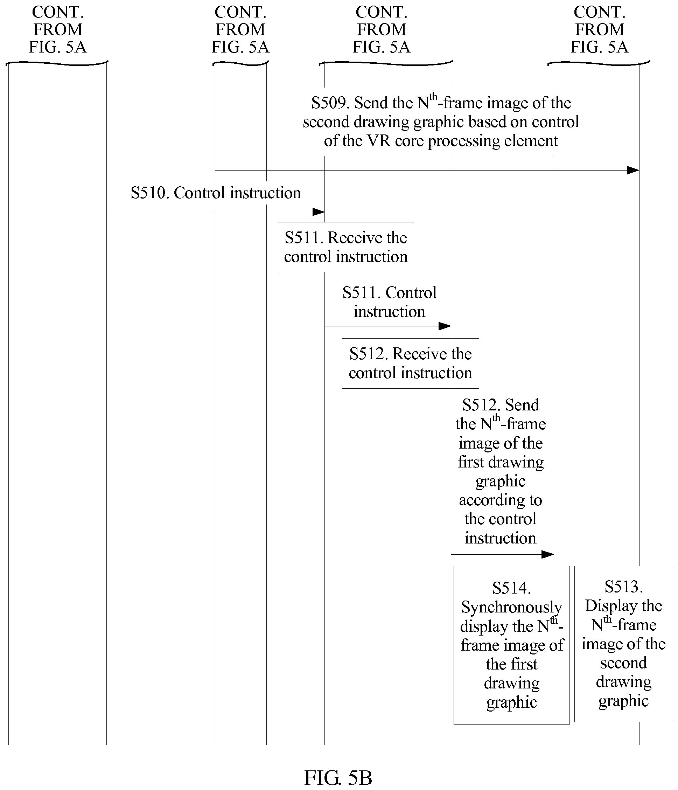

Based on the VR drawing system shown in FIG. 2 and an interaction process between modules or components in FIG. 4, an embodiment of the present invention provides a VR drawing method. An interaction process between the terminal device 01 and the VR device 03 in the VR drawing system shown in FIG. 2 is described in detail in the method. Specifically, as shown in FIG. 5A and FIG. 5B, the VR drawing method may include S501 to S514.

S501. A VR client determines N^{th}-frame image data of a first drawing graphic and N^{th}-frame image data of a second drawing graphic.

N is a positive integer greater than or equal to 1. The VR client may determine the N^{th}-frame image data of the first drawing graphic and the N^{th}-frame image data of the second drawing graphic according to an operation instruction of a user.

For example, the VR client may retrieve the N^{th}-frame image data of the first drawing graphic and the N^{th}-frame image data of the second drawing graphic from data stored in a memory of a terminal device according to the operation instruction of the user. The VR client may alternatively receive sensor data (data collected by the sensor) transmitted by a VR device, and determine the N^{th}-frame image data of the first drawing graphic and the N^{th}-frame image data of the second drawing graphic that are corresponding to the sensor data.

For example, a user wears a VR device, and enables a VR client in a mobile phone. It is assumed that after the VR client is enabled, a current picture (2D) displayed on a screen of the mobile phone is an N^{th}-frame image of a drawing graphic. The VR client may retrieve N^{th}-frame image data of the drawing graphic (that is, the N^{th}-frame image data of the first drawing graphic and the N^{th}-frame image data of the second drawing graphic) from image data of each frame of the drawing graphic stored in the memory of the mobile phone.

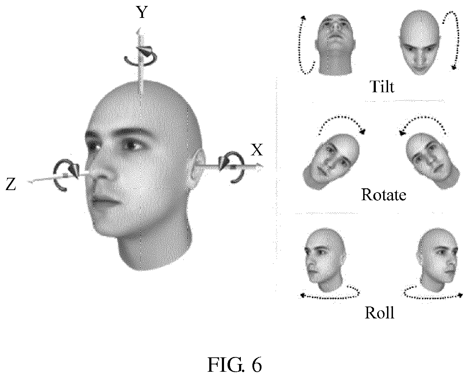

Alternatively, after wearing the VR device, the user may change an angle of viewing the drawing graphic through head turning or moving. As shown in FIG. 6, the user may change the angle of viewing the drawing graphic by using a pitch (Pitch), that is, a manner in which the head turns around an X-axis, or by using a yaw (Yaw), that is, a manner in which the head turns around a Y-axis, or by using a roll (Roll), that is, a manner in which the head turns around a Z-axis. When the head of the user turns or moves, a sensor of the VR device collects sensor data, and transmits the collected sensor data to the VR client. The VR client retrieves, based on the sensor data, the N^{th}-frame image data of the drawing graphic corresponding to the sensor data from image data of each frame of the drawing graphic stored in the memory of the mobile phone.

In this embodiment of the present invention, the N^{th}-frame image data of the first drawing graphic and the N^{th}-frame image data of the second drawing graphic may include an angle of viewing the N^{th}-frame image of the drawing graphic by the user, vertex data, coordinate data, and the like.

S502. The VR client sends the N^{th}-frame image data of the first drawing graphic and the N^{th}-frame image data of the second drawing graphic to a VR core processing element.

The VR core processing element is a control center of the terminal device, and the VR client may send the N^{th}-frame image data of the drawing graphic to the VR core processing element, so that the VR core processing element can control one or more GPUs to establish the N^{th}-frame image of the drawing graphic based on the N^{th}-frame image data of the drawing graphic.

S503. The VR core processing element receives the N^{th}-frame image data of the first drawing graphic and the N^{th}-frame image data of the second drawing graphic.

S504. The VR core processing element sends a drawing instruction to a receiving apparatus.

The drawing instruction includes the N^{th}-frame image data of the first drawing graphic. The drawing instruction is used to instruct a second GPU in the VR device to establish an N^{th}-frame image of the first drawing graphic. After receiving the N^{th}-frame image data of the first drawing graphic and the N^{th}-frame image data of the second drawing graphic, the VR core processing element sends the N^{th}-frame image data of the first drawing graphic to the receiving apparatus in the VR device in a form of an instruction.

For example, the terminal device may transmit the drawing instruction to the VR device in a wired connection manner. Alternatively, the terminal device may transmit the drawing instruction to the VR device in a wireless connection manner.

For example, the terminal device may transmit the drawing instruction to the VR device by using at least one of a communications interface (a communications interface between the terminal device and the VR device) or a universal serial bus (Universal Serial Bus, USB). For details, refer to the communications interface 50 and the receiving apparatus 71. The terminal device may transmit the drawing instruction to the VR device by establishing a real-time network link with the VR device.

S505. The receiving apparatus receives the drawing instruction, and sends the drawing instruction to a second GPU.

S506. The second GPU receives the drawing instruction, and establishes the N^{th}-frame image of the first drawing graphic based on the N^{th}-frame image data of the first drawing graphic.

Generally, a process of establishing the N^{th}-frame image of the first drawing graphic by the GPU is: vertex processing, that is, determining a shape and a location relationship of the N^{th}-frame image of the drawing graphic based on the N^{th}-frame image data of the drawing graphic, and establishing a framework (for example, a polygon) of the N^{th}-frame image of the drawing graphic; rasterization calculation, that is, mapping the N^{th}-frame image of the drawing graphic to a corresponding pixel by using an algorithm; pixel processing, that is, completing pixel calculation and processing during rasterization processing on each pixel, to determine a final attribute of each pixel; and texturing, that is, performing coloring processing to complete a texture of a polygon surface. Generally speaking, the polygon surface is attached with a corresponding picture, to generate a "real" graphic.

For example, the N^{th}-frame image data of the first drawing graphic in the drawing instruction includes an angle, vertex data, and coordinate data of the N^{th}-frame image of the first drawing graphic. The second GPU establishes a sphere based on the angle, the vertex data, and the coordinate data of the N^{th}-frame image of the first drawing graphic, maps the sphere to a corresponding pixel, and performs coloring processing on the sphere to obtain a sphere of a 3D effect.

S507. The VR core processing element sends the N^{th}-frame image data of the second drawing graphic to the first GPU.

After sending the drawing instruction to the receiving apparatus of the VR device, the VR core processing element sends the N^{th}-frame image data of the second drawing graphic to the first GPU in a form of an instruction.

For example, the N^{th}-frame image data of the second drawing graphic includes an angle, vertex data, and coordinate data of an N^{th}-frame image of the second drawing graphic.

S508. The first GPU receives the N^{th}-frame image data of the second drawing graphic, and establishes the N^{th}-frame image of the second drawing graphic based on the N^{th}-frame image data of the second drawing graphic.

For example, the first GPU may establish another sphere based on the angle, the vertex data, and the coordinate data of the N^{th}-frame image of the second drawing graphic, map the sphere to a corresponding pixel, and perform coloring processing on the sphere to obtain a sphere of a 3D effect.

In this embodiment of the present invention, the N^{th}-frame image of the first drawing graphic is established by the second GPU in the VR device, the N^{th}-frame image of the second drawing graphic is established by the first GPU in the terminal device, and the second GPU and the first GPU process the N^{th}-frame image data of the drawing graphic in parallel. Therefore, a time used for establishing the N^{th}-frame image of the drawing graphic by using only one GPU in the prior art can be reduced.

S509. The first GPU sends the N^{th}-frame image of the second drawing graphic to a second display based on control of the VR core processing element.

The VR core processing element may learn a moment at which the first GPU completes establishment of the N^{th}-frame image of the second drawing graphic. After the first GPU completes the establishment of the N^{th}-frame image of the second drawing graphic, the VR core processing element controls the first GPU to send the N^{th}-frame image of the second drawing graphic to the second display in the VR device.

Specifically, a first display control system is disposed in the terminal device, and the VR core processing element may control the first GPU to send the N^{th}-frame image of the second drawing graphic to the first display control system. The first display control system processes the N^{th}-frame image of the second drawing graphic. To be specific, the first display control system scans each pixel in the N^{th}-frame image of the second drawing graphic, and transmits a result of the scanning to the second display in the VR device.

For example, it is assumed that the first GPU completes the establishment of the N^{th}-frame image of the second drawing graphic at a moment t1, the second GPU completes establishment of the N^{th}-frame image of the first drawing graphic at a moment t2, and an N^{th} display moment preset by the VR core processing element (that is, a moment at which the display of the VR device displays the N^{th}-frame image of the drawing graphic) is a moment t3. The VR core processing element controls the first GPU to send the N^{th}-frame image of the second drawing graphic to the first display control system at the moment t3 for processing, and the first display control system sends a processed N^{th}-frame image of the second drawing graphic to the second display at the moment t3 (the moment t3 is later than or equal to the moment t2).

It should be noted that there is no time-related relationship between the moment t1 and the moment t2. The moment t1 may be equal to the moment t2, the moment t1 may be earlier than the moment t2, or the moment t1 may be later than the moment t2. Herein, that the moment t1 is earlier than the moment t2 is used only as an example to describe a moment at which the VR core processing element controls the first GPU to send the N^{th}-frame image of the second drawing graphic. In addition, a time period from sending the N^{th}-frame image of the second drawing graphic by the first GPU, to processing the N^{th}-frame image of the second drawing graphic by the first display control system, and then sending the processed N^{th}-frame image of the second drawing graphic to the second display is quite short, and may be ignored.

S510. The VR core processing element sends a control instruction to the receiving apparatus.

After the second GPU completes the establishment of the N^{th}-frame image of the first drawing graphic, the VR core processing element sends the control instruction to the receiving apparatus of the VR device at the preset N^{th} display moment.

For example, the VR core processing element may send the control instruction to the receiving apparatus at the moment t3.

S511. The receiving apparatus receives the control instruction, and sends the control instruction to the second GPU.

The control instruction is used to instruct the second GPU to send the N^{th}-frame image of the first drawing graphic to the display in the VR device.

S512. The second GPU receives the control instruction, and sends the N^{th}-frame image of the first drawing graphic to a first display according to the control instruction.

Specifically, a second display control system is disposed in the VR device, and the VR core processing element may control, by sending a control instruction, the second GPU to send the N^{th}-frame image of the first drawing graphic to the second display control system. The second display control system processes the N^{th}-frame image of the first drawing graphic, that is, scans each pixel of the N^{th}-frame image of the first drawing graphic, and transmits a result of the scanning to the first display in the VR device. The second display control system in this embodiment of the present invention may be the display control system 80 shown in FIG. 2 or FIG. 3.

For example, the VR core processing element may control the second GPU to send the N^{th}-frame image of the first drawing graphic to the second display control system at the moment t3 for processing, and the second display control system sends a processed N^{th}-frame image of the first drawing graphic to the first display at the moment t3.

S513. The second display displays the N^{th}-frame image of the second drawing graphic.

S514. The first display synchronously displays the N^{th}-frame image of the first drawing graphic.

The N^{th}-frame image of the second drawing graphic and the N^{th}-frame image of the first drawing graphic are used to form an N^{th}-frame VR image on the first display 61 and the second display 62.

For example, the first display and the second display both display the N^{th}-frame VR image at the moment t3.

According to the VR drawing method provided in this embodiment of the present invention, the first GPU in the terminal device and the second GPU in the VR device may respectively establish the N^{th}-frame image of the second drawing graphic and the N^{th}-frame image of the first drawing graphic, and the first GPU and the second GPU may establish the N^{th}-frame image of the second drawing graphic and the N^{th}-frame image of the first drawing graphic in parallel. Therefore, according to the method in this embodiment of the present invention, a time used for establishing the N^{th}-frame image of the drawing graphic is reduced, and a drawing graphic processing capability is improved. In addition, the VR core processing element is used to control the first GPU and the second GPU to synchronously send the N^{th}-frame images of the drawing graphics to the displays of the VR device, so that the first display and the second display synchronously display the N^{th}-frame VR image.

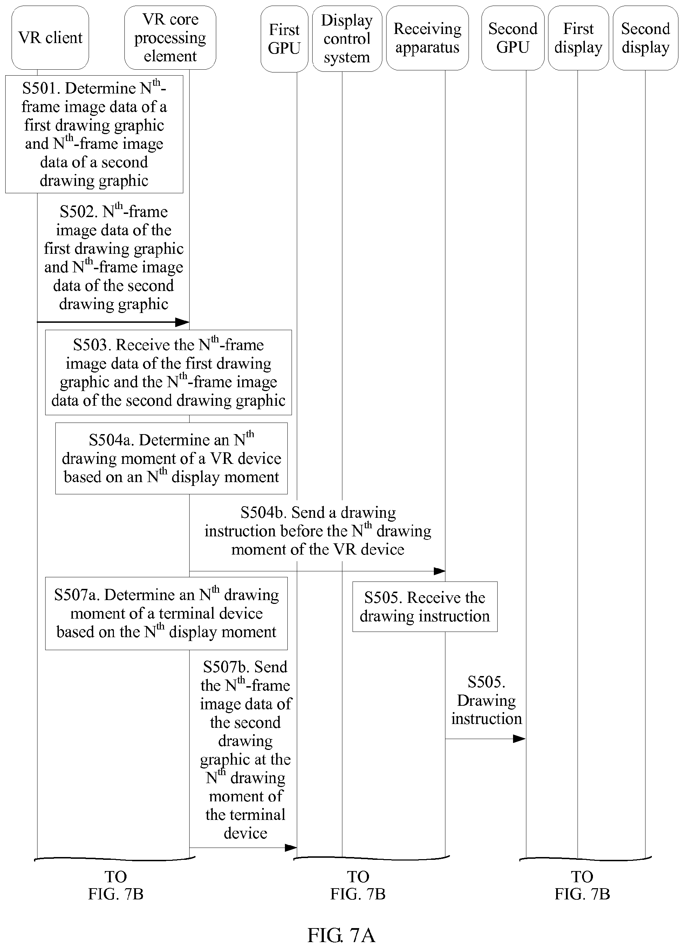

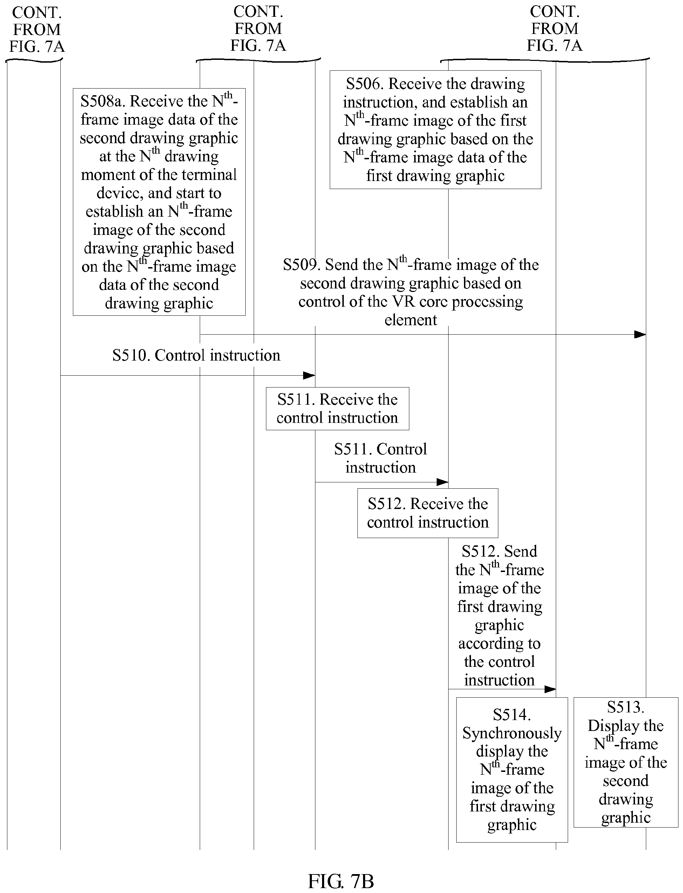

Further, the control instruction in this embodiment of the present invention may include the N^{th} display moment. The VR core processing element may determine, based on the N^{th} display moment, a moment for sending the drawing instruction to the VR device and a moment for establishing the N^{th}-frame image of the second drawing graphic by using the first GPU. Correspondingly, FIG. 7A and FIG. 7B show another VR drawing method according to an embodiment of the present invention. In comparison with the VR drawing method shown in FIG. 5A and FIG. 5B, S504 is replaced with S504a and S504b, S507 is replaced with S507a and S507b, and S508 is replaced with S508a. Only a difference is described in detail herein. Referring to FIG. 7A and FIG. 7B, the method includes the following steps.

S501. A VR client determines N^{th}-frame image data of a first drawing graphic and N^{th}-frame image data of a second drawing graphic.

S502. The VR client sends the N^{th}-frame image data of the first drawing graphic and the N^{th}-frame image data of the second drawing graphic to a VR core processing element.

S503. The VR core processing element receives the N^{th}-frame image data of the first drawing graphic and the N^{th}-frame image data of the second drawing graphic.

S504a. The VR core processing element determines an N^{th} drawing moment of a VR device based on an N^{th} display moment.

The VR core processing element may obtain duration used by a second GPU to establish an N^{th}-frame image of the first drawing graphic, and determine, based on the N^{th} display moment (that is, a moment at which the VR device displays the N^{th}-frame image of the first drawing graphic and an N^{th}-frame image of the second drawing graphic), the N^{th} drawing moment of the VR device (that is, a moment at which the second GPU starts to establish the N^{th}-frame image of the first drawing graphic), so that the N^{th} drawing moment of the VR device is earlier than the N^{th} display moment, and duration between the N^{th} drawing moment and the N^{th} display moment is greater than or equal to the duration used by the second GPU to establish the N^{th}-frame image of the first drawing graphic.

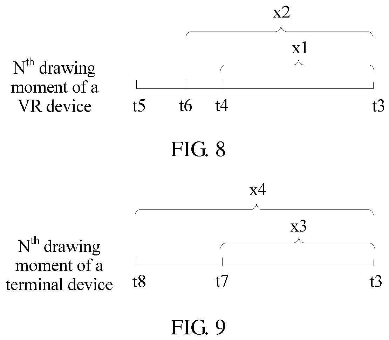

For example, as shown in FIG. 8, it is assumed that the N^{th} display moment is a moment t3, and the duration (referred to as first duration) that is obtained by the VR core processing element and that is used by the second GPU to establish the N^{th}-frame image of the first drawing graphic is x1 (ms), for example, duration from a moment t4 to the moment t3 in FIG. 8. The N^{th} drawing moment of the VR device determined by the VR core processing element is any moment (for example, a moment t6) from a moment t5 to the moment t4. The moment t6 is earlier than the moment t3, and duration x2 between the moment t6 and the moment t3 is greater than x1.

S504b. The VR core processing element sends a drawing instruction to a receiving apparatus before the N^{th} drawing moment of the VR device.

For example, the VR core processing element may send the drawing instruction to the receiving apparatus before the moment t6 shown in FIG. 8.

S505. The receiving apparatus receives the drawing instruction, and sends the drawing instruction to the second GPU.

S506. The second GPU receives the drawing instruction, and establishes the N^{th}-frame image of the first drawing graphic based on the N^{th}-frame image data of the first drawing graphic.

S507a. The VR core processing element determines an N^{th} drawing moment of a terminal device based on the N^{th} display moment.

The VR core processing element may obtain duration used by a first GPU to establish the N^{th}-frame image of the second drawing graphic, and determine the N^{th} drawing moment of the terminal device (that is, a moment at which the first GPU starts to establish the N^{th}-frame image of the second drawing graphic) based on the N^{th} display moment. The N^{th} drawing moment of the terminal device is earlier than the N^{th} display moment, and duration between the N^{th} drawing moment and the N^{th} display moment is greater than or equal to the duration used by the first GPU to establish the N^{th}-frame image of the second drawing graphic.

For example, as shown in FIG. 9, it is assumed that the N^{th} display moment is a moment t3, and the duration (referred to as second duration) that is obtained by the VR core processing element and that is used by the first GPU to establish the N^{th}-frame image of the second drawing graphic is x3 (ms), for example, duration from a moment t7 to the moment t3 in FIG. 9. The N^{th} drawing moment of the terminal device determined by the VR core processing element is any moment (for example, a moment t8) from the moment t8 to the moment t7, the moment t8 is earlier than the moment t3, and duration x4 between the moment t8 and the moment t3 is greater than x3.

S507b. The VR core processing element sends the N^{th}-frame image data of the second drawing graphic to the first GPU at the N^{th} drawing moment of the terminal device.

For example, the VR core processing element may send the N^{th}-frame image data of the second drawing graphic to the first GPU at the moment t8 shown in FIG. 9.

It should be noted that a time period from sending the N^{th}-frame image of the second drawing graphic to the first GPU by the VR core processing element to receiving the N^{th}-frame image of the second drawing graphic by the first GPU is quite short, and may be ignored.

S508a. The first GPU receives the N^{th}-frame image data of the second drawing graphic at the N^{th} drawing moment of the terminal device, and starts to establish the N^{th}-frame image of the second drawing graphic based on the N^{th}-frame image data of the second drawing graphic.

S509. The first GPU sends the N^{th}-frame image of the second drawing graphic to a second display based on control of the VR core processing element.

S510. The VR core processing element sends a control instruction to the receiving apparatus.

S511. The receiving apparatus receives the control instruction, and sends the control instruction to the second GPU.

S512. The second GPU receives the control instruction, and sends the N^{th}-frame image of the first drawing graphic to a first display according to the control instruction.

S513. The second display displays the N^{th}-frame image of the second drawing graphic.

S514. The first display synchronously displays the N^{th}-frame image of the first drawing graphic.

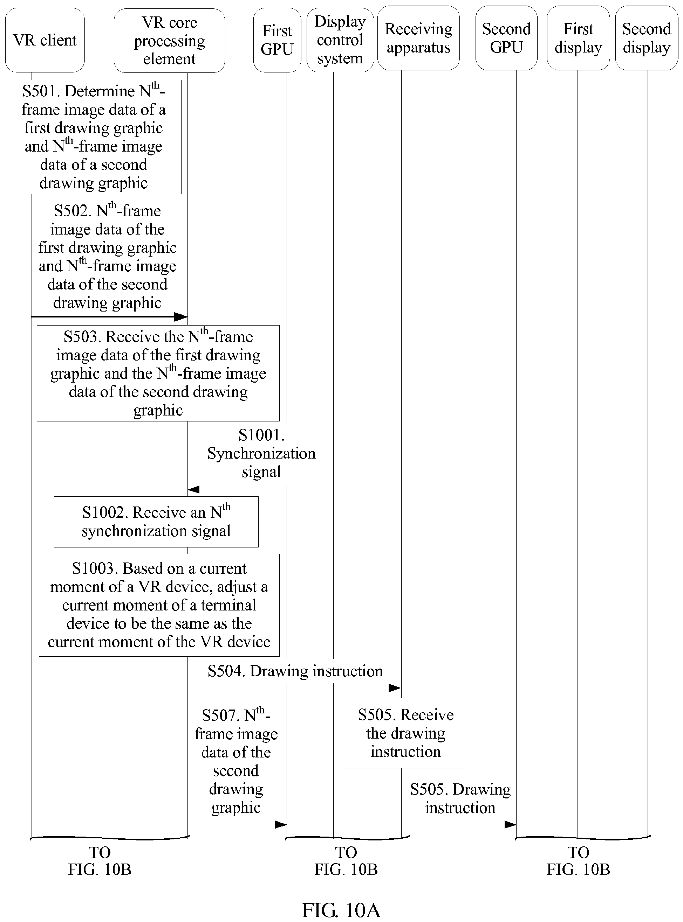

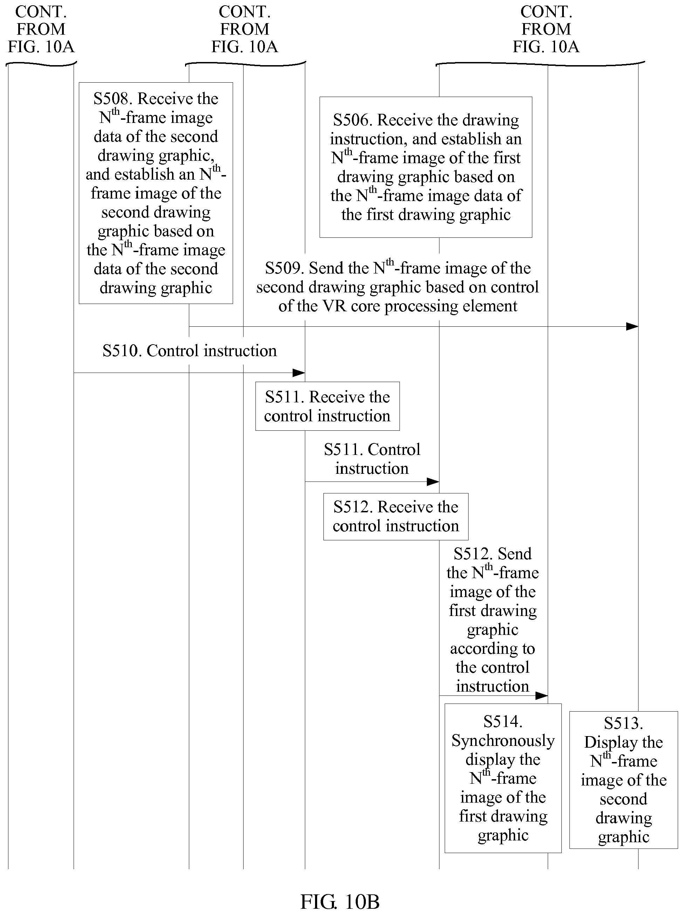

Further, the VR core processing element may adjust, based on a synchronization signal sent by a display control system in the VR device, a current moment of the terminal device to be the same as a current moment of the VR device, to ensure that the first display and the second display can synchronously display an N^{th}-frame VR image at the N^{th} display moment. Specifically, in comparison with the VR drawing method shown in FIG. 5A and FIG. 5B or FIG. 7A and FIG. 7B, S1001 to S1003 are mainly added before S504 or S504b. FIG. 10A and FIG. 10B show another VR drawing method according to an embodiment of the present invention in comparison with the VR drawing method shown in FIG. 5A and FIG. 5B. The method includes the following steps.

S1001. A display control system sends a synchronization signal to a VR core processing element.

The display control system may send the synchronization signal to the VR core processing element each time a display of a VR device displays an image of a drawing graphic.

S1002. The VR core processing element receives an N^{th} synchronization signal.

The synchronization signal includes a current moment of the VR device, and the synchronization signal is used to synchronize a current moment of a terminal device.

S1003. The VR core processing element adjusts, based on the current moment of the VR device, the current moment of the terminal device to be the same as the current moment of the VR device.

The current moment of the terminal device may be different from the current moment of the VR device. As a result, when the VR core processing element sends a control instruction to the VR device, an N^{th} display moment included in the control instruction may be different from an N^{th} display moment of the VR device, and consequently, displays of the VR device cannot separately and synchronously display an N^{th}-frame image of a first drawing graphic and an N^{th}-frame image of a second drawing graphic at the N^{th} display moment. If a time adjustment method provided in this embodiment of the present invention is used, after the terminal device adjusts the current moment of the terminal device to be the same as the current moment of the VR device, it can be ensured that when the terminal device sends the N^{th}-frame image of the second drawing graphic and the control instruction to the VR device, the VR device can synchronously display the N^{th}-frame image of the second drawing graphic and the N^{th}-frame image of the first drawing graphic at the N^{th} display moment.

The foregoing mainly describes the solutions provided in the embodiments of the present invention from perspectives of a terminal device and a VR device. It can be understood that, to implement the foregoing functions, the terminal device and the VR device each include a hardware structure or a software module corresponding to each function. A person skilled in the art should easily be aware that, with reference to the terminal device and the VR device and algorithms steps in the examples described in the embodiments disclosed in this specification, each function of each device can be implemented by hardware or a combination of hardware and computer software. Whether a function is performed by hardware or hardware driven by computer software depends on particular applications and design constraints of the technical solutions. A person skilled in the art can implement the described functions by using different methods for each specific application.

With reference to related method steps in FIG. 2, FIG. 5A and FIG. 5B, FIG. 7A and FIG. 7B, and FIG. 10A and FIG. 10B, the VR client 11 is configured to support S501 and S502 in the foregoing embodiment, or is further used in another process of the technology described in this specification. The VR core processing element 12 is configured to support S503, S504, S507, S509, S510, S504a, S504b, S507a, S507b, S1002, and S1003 in the foregoing embodiment, or is further used in another process of the technology described in this specification. The first GPU 20 is configured to support S508 and S508a in the foregoing embodiment, or is further used in another process of the technology described in this specification.

The receiving apparatus 71 is configured to support S505 and S511 in the foregoing embodiment, or is further used in another process of the technology described in this specification. The second GPU 72 is configured to support S506 and S512 in the foregoing embodiment, or is further used in another process of the technology described in this specification. The first display 51 is configured to support S514 in the foregoing embodiment, or is further used in another process of the technology described in this specification. The second display 62 is configured to support S513 in the foregoing embodiment, or is further used in another process of the technology described in this specification. The display control system 80 is configured to support S1001 in the foregoing embodiment, or is further used in another process of the technology described in this specification.

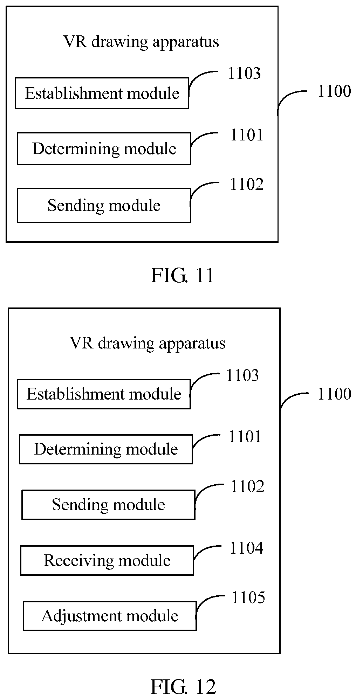

FIG. 11 is a possible schematic diagram of an embodiment of a VR drawing apparatus. The VR drawing apparatus 1100 may include a determining module 1101, a sending module 1102, and an establishment module 1103. A function of the determining module 1101 may be implemented by using the processor 10 shown in FIG. 2. A function of the sending module 1102 may be implemented by using the communications interface 50 shown in FIG. 2. A function of the establishment module 1103 may be implemented by using the first GPU 20 shown in FIG. 2. Further, as shown in FIG. 12, the VR drawing apparatus 1100 shown in FIG. 11 may further include a receiving module 1104 and an adjustment module 1105. A function of the receiving module 1104 may be implemented by using the communications interface 50 shown in FIG. 2. A function of the adjustment module 1105 may be implemented by using the processor 10 shown in FIG. 2. Optionally, the determining module 1101, the sending module 1102, the establishment module 1103, the receiving module 1104, and the adjustment module 1105 may be implemented by software or a combination of software and hardware. Certainly, the VR drawing apparatus 1100 provided in this embodiment of the present invention includes but is not limited to the foregoing modules. For example, the VR drawing apparatus 1100 may further include a storage module. The storage module may be configured to store N^{th}-frame image data of a first drawing graphic and N^{th}-frame image data of a second drawing graphic in this embodiment of the present invention. A function of the storage module may be implemented by using the memory 30 shown in FIG. 2.

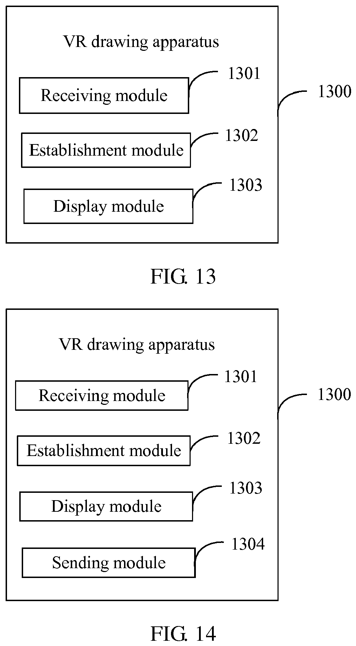

FIG. 13 is another possible schematic diagram of an embodiment of a VR drawing apparatus. The VR drawing apparatus 1300 includes a receiving module 1301, an establishment module 1302, and a display module 1303. A function of the receiving module 1301 may be implemented by using the receiving apparatus 71 shown in FIG. 2. A function of the establishment module 1302 may be implemented by using the second GPU 72 shown in FIG. 2. A function of the display module 1303 may be implemented by using the first display 61 and the second display 62 shown in FIG. 2. Further, as shown in FIG. 14, the VR drawing apparatus 1300 shown in FIG. 13 may further include a sending module 1304. A function of the sending module 1304 may be implemented by using the receiving apparatus 71 shown in FIG. 2. Optionally, the receiving module 1301, the establishment module 1302, the display module 1303, and the sending module 1304 may be implemented by using software or a combination of software and hardware.

Certainly, the VR drawing apparatus 1300 provided in this embodiment of the present invention includes but is not limited to the foregoing modules. For example, the VR drawing apparatus 1300 may further include a storage module. The storage module may be configured to store an N^{th}-frame image of a first drawing graphic in this embodiment of the present invention.

Based on the foregoing descriptions of the implementations, a person skilled in the art can clearly understand that, for convenience and brevity of description, division of the foregoing function modules is merely used as an example for illustration. In actual application, the foregoing functions may be allocated to different function modules and implemented according to a requirement, that is, an inner structure of an apparatus is divided into different function modules to implement all or some of the functions described above. For a detailed working process of the foregoing system, apparatus, and unit, refer to a corresponding process in the foregoing method embodiments, and details are not described herein again.

An embodiment of the method procedure in the present invention may be stored in a computer readable storage medium if the embodiment is implemented in a form of a software function unit and is sold or used as an independent product. Therefore, an embodiment of the present invention further provides a computer storage medium. The computer storage medium stores program code of one or more parts. When at least one of the processor 10, the communications interface 40, the first GPU 20, the second GPU 72, and the receiving apparatus 71 in FIG. 2 executes the program code, the terminal device 01 or the VR device 03 shown in FIG. 2 is driven to perform a method step related to a corresponding device in any one of FIG. 5A and FIG. 5B, FIG. 7A and FIG. 7B, and FIG. 10A and FIG. 10B.

Based on such an understanding, all or some of the processes of the related method embodiments may be implemented in a form of a computer software product. The computer software product is stored in a storage medium and includes several instructions for instructing a computer device or at least one processor (processor) to perform all or some of the steps of the methods described in the embodiments of the present invention. The storage medium includes any medium that can store program code, for example, a USB flash drive, a removable hard disk, a read-only memory (ROM, Read-Only Memory), a random access memory (RAM, Random Access Memory), a magnetic disk, or a compact disc.

The foregoing descriptions are merely specific implementations of the present invention, but are not intended to limit the protection scope of the present invention. Any variation or replacement within the technical scope disclosed in the present invention shall fall within the protection scope of the present invention. Therefore, the protection scope of the present invention shall be subject to the protection scope of the claims.

## Claims

1. A virtual reality VR drawing method, wherein the method comprises:
determining, by a terminal device, N^{th}-frame image data of a first drawing graphic and N^{th}-frame image data of a second drawing graphic, wherein N is a positive integer greater than or equal to 1;
sending, by the terminal device, a drawing instruction to a VR device, to instruct the VR device to establish, by using a second graphics processing unit GPU in the VR device, an N^{th}-frame image of the first drawing graphic based on the N^{th}-frame image data of the first drawing graphic, wherein the drawing instruction comprises the N^{th}-frame image data of the first drawing graphic;
establishing, by the terminal device by using a first GPU in the terminal device, an N^{th}-frame image of the second drawing graphic based on the N^{th}-frame image data of the second drawing graphic;
sending, by the terminal device, the N^{th}-frame image of the second drawing graphic to the VR device, to instruct the VR device to display the N^{th}-frame image of the second drawing graphic; and
sending, by the terminal device, a control instruction to the VR device, to instruct the VR device to synchronously display the N^{th}-frame image of the first drawing graphic, wherein the N^{th}-frame image of the second drawing graphic and the N^{th}-frame image of the first drawing graphic are used to form an N^{th}-frame VR image.

2. The VR drawing method according to claim 1, wherein the control instruction comprises an N^{th} display moment; and
the sending, by the terminal device, a drawing instruction to a VR device comprises:
determining, by the terminal device, an N^{th} drawing moment of the VR device based on the N^{th} display moment, wherein the N^{th} drawing moment of the VR device is earlier than the N^{th} display moment, and duration between the N^{th} drawing moment and the N^{th} display moment is greater than or equal to duration used by the second GPU to establish the N^{th}-frame image of the first drawing graphic; and
sending, by the terminal device, the drawing instruction to the VR device before the N^{th} drawing moment of the VR device.

3. The VR drawing method according to claim 1 or 2, wherein the control instruction comprises the N^{th} display moment; and
the establishing, by the terminal device by using a first GPU in the terminal device, an N^{th}-frame image of the second drawing graphic based on the N^{th}-frame image data of the second drawing graphic comprises:
determining, by the terminal device, an N^{th} drawing moment of the terminal device based on the N^{th} display moment, wherein the N^{th} drawing moment of the terminal device is earlier than the N^{th} display moment, and duration between the N^{th} drawing moment and the N^{th} display moment is greater than or equal to duration used by the first GPU to establish the N^{th}-frame image of the second drawing graphic; and
establishing, by the terminal device starting from the N^{th} drawing moment of the terminal device by using the first GPU, the N^{th}-frame image of the second drawing graphic based on the N^{th}-frame image data of the second drawing graphic.

4. The VR drawing method according to any one of claims 1 to 3, wherein before the sending, by the terminal device, a drawing instruction to a VR device, the method further comprises:
receiving, by the terminal device, a synchronization signal sent by the VR device, wherein the synchronization signal comprises a current moment of the VR device; and
adjusting, by the terminal device based on the current moment of the VR device, a current moment of the terminal device to be the same as the current moment of the VR device.

5. The VR drawing method according to any one of claims 1 to 4, wherein the determining, by a terminal device, N^{th}-frame image data of a first drawing graphic and N^{th}-frame image data of a second drawing graphic comprises:
receiving, by the terminal device, sensor data transmitted by the VR device; and
determining, by the terminal device, the N^{th}-frame image data of the first drawing graphic and the N^{th}-frame image data of the second drawing graphic that are corresponding to the sensor data.

6. A virtual reality VR drawing method, wherein the method comprises:
receiving, by a VR device, a drawing instruction sent by a terminal device, wherein the drawing instruction comprises N^{th}-frame image data of a first drawing graphic, and N is a positive integer greater than or equal to 1;
establishing, by the VR device by using a second graphics processing unit GPU in the VR device, an N^{th}-frame image of the first drawing graphic based on the N^{th}-frame image data of the first drawing graphic;
receiving, by the VR device, an N^{th}-frame image that is of a second drawing graphic and that is sent by the terminal device;
receiving, by the VR device, a control instruction sent by the terminal device; and
displaying, by the VR device, the N^{th}-frame image of the second drawing graphic, and synchronously displaying the N^{th}-frame image of the first drawing graphic according to the control instruction, wherein the N^{th}-frame image of the second drawing graphic and the N^{th}-frame image of the first drawing graphic are used to form an N^{th}-frame VR image.

7. The VR drawing method according to claim 6, wherein the control instruction comprises an N^{th} display moment; and
the establishing, by the VR device by using a second graphics processing unit GPU in the VR device, an N^{th}-frame image of the first drawing graphic based on the N^{th}-frame image data of the first drawing graphic comprises:
establishing, by the VR device starting from an N^{th} drawing moment of the VR device by using the second GPU, the N^{th}-frame image of the first drawing graphic based on the N^{th}-frame image data of the first drawing graphic, wherein the N^{th} drawing moment of the VR device is earlier than the N^{th} display moment, and duration between the N^{th} drawing moment and the N^{th} display moment is greater than or equal to duration used by the second GPU to establish the N^{th}-frame image of the first drawing graphic.

8. The VR drawing method according to claim 6 or 7, wherein before the receiving, by a VR device, a drawing instruction sent by a terminal device, the method further comprises:
sending, by the VR device, a synchronization signal to the terminal device, wherein the synchronization signal comprises a current moment of the VR device, and the synchronization signal is used to synchronize a current moment of the terminal device.

9. The VR drawing method according to any one of claims 6 to 8, wherein before the establishing, by the VR device by using a second graphics processing unit GPU in the VR device, an N^{th}-frame image of the first drawing graphic based on the N^{th}-frame image data of the first drawing graphic, the method further comprises:
sending, by the VR device, sensor data to the terminal device, wherein the sensor data is used by the terminal device to determine the N^{th}-frame image data of the first drawing graphic and N^{th}-frame image data of the second drawing graphic.

10. A terminal device, comprising a communications interface, a processor, and a first graphics processing unit GPU, wherein
the processor is configured to: determine N^{th}-frame image data of a first drawing graphic and N^{th}-frame image data of a second drawing graphic, and generate a drawing instruction, wherein N is a positive integer greater than or equal to 1;
the communications interface is configured to send the drawing instruction to a virtual reality VR device, to instruct the VR device to establish, by using a second GPU in the VR device, an N^{th}-frame image of the first drawing graphic based on the N^{th}-frame image data of the first drawing graphic, wherein the drawing instruction comprises the N^{th}-frame image data of the first drawing graphic;
the first GPU is configured to establish an N^{th}-frame image of the second drawing graphic based on the N^{th}-frame image data of the second drawing graphic;
the communications interface is further configured to send the N^{th}-frame image of the second drawing graphic to the VR device, to instruct the VR device to display the N^{th}-frame image of the second drawing graphic; and
the communications interface is further configured to send a control instruction to the VR device, to instruct the VR device to synchronously display the N^{th}-frame image of the first drawing graphic, wherein the N^{th}-frame image of the second drawing graphic and the N^{th}-frame image of the first drawing graphic are used to form an N^{th}-frame VR image.

11. The terminal device according to claim 10, wherein the control instruction comprises an N^{th} display moment;
the processor is specifically configured to:
determine an N^{th} drawing moment of the VR device based on the N^{th} display moment, wherein the N^{th} drawing moment of the VR device is earlier than the N^{th} display moment, and duration between the N^{th} drawing moment and the N^{th} display moment is greater than or equal to duration used by the second GPU to establish the N^{th}-frame image of the first drawing graphic; and
the communications interface is specifically configured to:
send the drawing instruction to the VR device before the N^{th} drawing moment of the VR device.

12. The terminal device according to claim 10 or 11, wherein the control instruction comprises the N^{th} display moment;
the processor is specifically configured to:
determine an N^{th} drawing moment of the terminal device based on the N^{th} display moment, wherein the N^{th} drawing moment of the terminal device is earlier than the N^{th} display moment, and duration between the N^{th} drawing moment and the N^{th} display moment is greater than or equal to duration used by the first GPU to establish the N^{th}-frame image of the second drawing graphic; and
the first GPU is specifically configured to:
establish, starting from the N^{th} drawing moment of the terminal device, the N^{th}-frame image of the second drawing graphic based on the N^{th}-frame image data of the second drawing graphic.

13. The terminal device according to any one of claims 10 to 12, wherein the communications interface is further configured to: before sending the drawing instruction to the VR device, receive a synchronization signal sent by the VR device, wherein the synchronization signal comprises a current moment of the VR device; and
the processor is further configured to adjust, based on the current moment of the VR device, a current moment of the terminal device to be the same as the current moment of the VR device.

14. The terminal device according to any one of claims 10 to 13, wherein the communications interface is further configured to receive sensor data transmitted by the VR device; and
the processor is further configured to determine the N^{th}-frame image data of the first drawing graphic and the N^{th}-frame image data of the second drawing graphic that are corresponding to the sensor data.

15. The terminal device according to any one of claims 10 to 14, wherein the terminal device further comprises a memory, wherein
the memory is configured to store a computer executable instruction, the processor, the communications interface, the first GPU, and the memory are connected to each other by using a bus, and when the terminal device runs, the processor executes the computer executable instruction stored in the memory.

16. A virtual reality VR device, comprising a communications interface, a second graphics processing unit GPU, and a display component, wherein
the communications interface is configured to receive a drawing instruction sent by a terminal device, wherein the drawing instruction comprises N^{th}-frame image data of a first drawing graphic, and N is a positive integer greater than or equal to 1;
the second GPU is configured to establish an N^{th}-frame image of the first drawing graphic based on the N^{th}-frame image data of the first drawing graphic;
the communications interface is further configured to receive an N^{th}-frame image that is of a second drawing graphic and that is sent by the terminal device;
the communications interface is further configured to receive a control instruction sent by the terminal device; and
the display component is configured to display the N^{th}-frame image of the second drawing graphic, and synchronously display the N^{th}-frame image of the first drawing graphic according to the control instruction, wherein the N^{th}-frame image of the second drawing graphic and the N^{th}-frame image of the first drawing graphic are used to form an N^{th}-frame VR image.

17. The VR device according to claim 16, wherein the control instruction comprises an N^{th} display moment; and
the second GPU is specifically configured to:
establish, starting from an N^{th} drawing moment of the VR device, the N^{th}-frame image of the first drawing graphic based on the N^{th}-frame image data of the first drawing graphic, wherein the N^{th} drawing moment of the VR device is earlier than the N^{th} display moment, and duration between the N^{th} drawing moment and the N^{th} display moment is greater than or equal to duration used by the second GPU to establish the N^{th}-frame image of the first drawing graphic.

18. The VR device according to claim 16 or 17, wherein the communications interface is further configured to: before receiving the drawing instruction sent by the terminal device, send a synchronization signal to the terminal device, wherein the synchronization signal comprises a current moment of the VR device, and the synchronization signal is used to synchronize a current moment of the terminal device.

19. The VR device according to any one of claims 16 to 18, wherein the VR device further comprises a sensor, wherein
the sensor is configured to: before the second GPU establishes the N^{th}-frame image of the first drawing graphic based on the N^{th}-frame image data of the first drawing graphic, obtain sensor data, wherein the sensor data is used by the terminal device to determine the N^{th}-frame image data of the first drawing graphic and N^{th}-frame image data of the second drawing graphic; and
the communications interface is further configured to send the sensor data to the terminal device.

20. A virtual reality VR drawing apparatus, wherein the VR drawing apparatus comprises:
a determining module, configured to determine N^{th}-frame image data of a first drawing graphic and N^{th}-frame image data of a second drawing graphic, wherein N is a positive integer greater than or equal to 1;
a sending module, configured to send a drawing instruction to a VR device, to instruct the VR device to establish, by using a second graphics processing unit GPU in the VR device, an N^{th}-frame image of the first drawing graphic based on the N^{th}-frame image data of the first drawing graphic, wherein the drawing instruction comprises the N^{th}-frame image data that is of the first drawing graphic and that is determined by the determining module; and
an establishment module, configured to establish, by using a first GPU in the terminal device, an N^{th}-frame image of the second drawing graphic based on the N^{th}-frame image data that is of the second drawing graphic and that is determined by the determining module, wherein
the sending module is further configured to send the N^{th}-frame image that is of the second drawing graphic and that is established by the establishment module to the VR device, to instruct the VR device to display the N^{th}-frame image of the second drawing graphic; and
the sending module is further configured to send a control instruction to the VR device, to instruct the VR device to synchronously display the N^{th}-frame image of the first drawing graphic, wherein the N^{th}-frame image of the second drawing graphic and the N^{th}-frame image of the first drawing graphic are used to form an N^{th}-frame VR image.

21. The VR drawing apparatus according to claim 20, wherein the control instruction comprises an N^{th} display moment; and
the sending module is specifically configured to:
determine an N^{th} drawing moment of the VR device based on the N^{th} display moment, wherein the N^{th} drawing moment of the VR device is earlier than the N^{th} display moment, and duration between the N^{th} drawing moment and the N^{th} display moment is greater than or equal to duration used by the second GPU to establish the N^{th}-frame image of the first drawing graphic; and
send the drawing instruction to the VR device before the N^{th} drawing moment of the VR device.

22. The VR drawing apparatus according to claim 20 or 21, wherein the control instruction comprises the N^{th} display moment; and
the establishment module is specifically configured to:
determine an N^{th} drawing moment of the terminal device based on the N^{th} display moment, wherein the N^{th} drawing moment of the terminal device is earlier than the N^{th} display moment, and duration between the N^{th} drawing moment and the N^{th} display moment is greater than or equal to duration used by the first GPU to establish the N^{th}-frame image of the second drawing graphic; and
establish, starting from the N^{th} drawing moment of the terminal device by using the first GPU, the N^{th}-frame image of the second drawing graphic based on the N^{th}-frame image data that is of the second drawing graphic and that is determined by the determining module.

23. The VR drawing apparatus according to any one of claims 20 to 22, wherein the VR drawing apparatus further comprises:
a receiving module, configured to: before the sending module sends the drawing instruction to the VR device, receive a synchronization signal sent by the VR device, wherein the synchronization signal comprises a current moment of the VR device; and
an adjustment module, configured to adjust, based on the current moment of the VR device, a current moment of the terminal device to be the same as the current moment of the VR device.

24. The VR drawing apparatus according to any one of claims 20 to 23, wherein the determining module is specifically configured to:
receive sensor data transmitted by the VR device; and
determine the N^{th}-frame image data of the first drawing graphic and the N^{th}-frame image data of the second drawing graphic that are corresponding to the sensor data.

25. A virtual reality VR drawing apparatus, wherein the VR drawing apparatus comprises:
a receiving module, configured to receive a drawing instruction sent by a terminal device, wherein the drawing instruction comprises N^{th}-frame image data of a first drawing graphic, and N is a positive integer greater than or equal to 1;
an establishment module, configured to establish, by using a second graphics processing unit GPU in a VR device, an N^{th}-frame image of the first drawing graphic based on the N^{th}-frame image data that is of the first drawing graphic and that is in the drawing instruction received by the receiving module, wherein
the receiving module is further configured to receive an N^{th}-frame image that is of a second drawing graphic and that is sent by the terminal device; and
the receiving module is further configured to receive a control instruction sent by the terminal device; and
a display module, configured to display the N^{th}-frame image that is of the second drawing graphic and that is received by the receiving module, and synchronously display, according to the control instruction, the N^{th}-frame image that is of the first drawing graphic and that is established by the establishment module, wherein the N^{th}-frame image of the second drawing graphic and the N^{th}-frame image of the first drawing graphic are used to form an N^{th}-frame VR image.

26. The VR drawing apparatus according to claim 25, wherein the control instruction comprises an N^{th} display moment; and
the establishment module is specifically configured to:
establish, starting from an N^{th} drawing moment of the VR device by using the second GPU, the N^{th}-frame image of the first drawing graphic based on the N^{th}-frame image data of the first drawing graphic, wherein the N^{th} drawing moment of the VR device is earlier than the N^{th} display moment, and duration between the N^{th} drawing moment and the N^{th} display moment is greater than or equal to duration used by the second GPU to establish the N^{th}-frame image of the first drawing graphic.

27. The VR drawing apparatus according to claim 25 or 26, wherein the VR drawing apparatus further comprises:
a sending module, configured to: before the receiving module receives the drawing instruction sent by the terminal device, send a synchronization signal to the terminal device, wherein the synchronization signal comprises a current moment of the VR device, and the synchronization signal is used to synchronize a current moment of the terminal device.

28. The VR drawing apparatus according to any one of claims 25 to 27, wherein the sending module is further configured to: before the establishment module establishes the N^{th}-frame image of the first drawing graphic based on the N^{th}-frame image data of the first drawing graphic, send sensor data to the terminal device, wherein the sensor data is used by the terminal device to determine the N^{th}-frame image data of the first drawing graphic and the N^{th}-frame image data of the second drawing graphic.

29. A virtual reality VR drawing system, comprising the terminal device according to any one of claims 10 to 15 and the VR device according to any one of claims 16 to 19.
